# EUROPEAN PATENT SPECIFICATION

(11) **EP 1 552 577 B1**
(45) Date of publication and mention of the grant of the patent: **21.01.2009**
(21) Application number: 03748377.3
(22) Date of filing: 05.08.2003
(51) Int. Cl.: H01M 8/16

(54) **FUEL CELL USING BIOFILMS AS CATALYST FOR THE CATHODE REACTION AND/OR THE ANODE REACTION**
BRENNSTOFFZELLE MIT BIOFILM ALS KATALYSATOR FÜR DIE KATHODENREAKTION UND/ODER ANODENREAKTION
PILE A COMBUSTIBLE UTILISANT DES BIOFILMS COMME CATALYSEURS DES REACTIONS CATHODIQUES ET ANODIQUES

(30) Priority: 06.08.2002 FR 0210009
(43) Date of publication of application: 13.07.2005
(73) Proprietor: CENTRE NATIONAL DE LA RECHERCHE SCIENTIFIQUE (CNRS), 75794 Paris Cedex 16 (FR); COMMISSARIAT A L'ENERGIE ATOMIQUE, 75015 Paris (FR)
(72) Inventor: BERGEL, Alain, F-31500 Toulouse (FR); FERON, Damien, F-92260 Fontenay Aux Roses (FR)
(74) Representative: Poulin, Gérard
(86) International application number: PCT/IB2003/003637
(87) International publication number: WO 2004/015806

(56) References cited:
- EP-A- 0 827 229
- WO-A-01/04061
- US-A- 3 228 799
- US-A- 3 278 335
- US-B1- 6 294 281
- SAKAKIBARA Y; NAKAYAMA T: "A novel multi-electrode system for electrolytic and biological water treatments: - electric charge transfer and application to denitrification" 2001, XP004321651

## Description

### Technical Field

The present invention relates to a process for the treatment of a fuel cell electrode (cathode and/or anode), the said treatment being intended to improve the catalysis of the reaction at the electrode, and to a fuel cell provided with a biofilm on at least part of the surface of the said electrode.

The general field of the invention is therefore that of fuel cells and more particularly that of the catalysis of the reactions at the electrodes of fuel cells.

### Prior Art

The basic principle covering the operation of a fuel cell, for example a hydrogen/air fuel cell, is the electrochemical combustion of dihydrogen (H₂) and dioxygen (O₂).

The reactions at the terminals of the electrodes are represented by the following equations (1) and (2):
(1) at the anode:

   H₂ → 2H⁺ + 2e⁻ or H₂ + 2OH⁻ → 2H₂O + 2e⁻;
(2) at the cathode:

   ½O₂ + 2H⁺ + 2e⁻→ H₂O or ½O₂ + H₂O + 2e⁻ → 2OH⁻.

These two reactions have slow rates, resulting in catalysts being placed at the electrodes so as to improve the rate of the reactions taking place at the surface of these electrodes.

Generally speaking, the catalysts placed so as to improve the rate of the electrode reactions are metal catalysts, such as catalysts based on platinum or gold.

However, the use of such catalysts has the following drawbacks:
they constitute products that are both expensive, because of the amounts needed to obtain satisfactory catalysis, and potential pollutants of the environment; and
- they have a low efficiency at low temperatures, such as room temperature, which may lead to cell start-up difficulties.

To alleviate these drawbacks, research has been carried out into putting in place less expensive and more efficient catalysts.

Thus, as regards cells operating by gas diffusion, research has been carried out essentially into metal catalysts that are less expensive than platinum or gold or into novel arrangements or combinations of metal catalysts, that may contribute to improving the catalysis of the electrode reactions. However, the pollution problem inherent in the use of this type of catalyst still remains.

As regards fuel cells operating in aqueous medium, research has been carried out into the incorporation of specific bacteria or enzymes at the electrodes by grafting.

However, the cells of the prior art generally use specific bacteria for providing functions other than that of improving the catalysis of the electrode reactions.

Thus, the presence of bacteria at the electrodes may prove to be effective for producing or regenerating, within the core of the cell, the fuel, such as hydrogen, that is oxidized at the anode. Many examples of bacteria providing this function are given in an article by Palmore and Whitesides, "Microbial and Enzymatic Biofuel Cell", American Chemical Society, Chapter 14, pages 271-290 (1994) [1]. In other cases, bacteria may also be used to regenerate the reduced form of an electrochemical mediator, responsible for ensuring electron transfer at the anode. To reduce the electrochemical mediator, specific bacteria extract electrons from substrates, such as glucose, sucrose, succinate. Many examples of bacteria of this type are cited in the abovementioned reference [1]. From among the most recent studies there may be cited the study mentioned in the article by Yagishita et al., "Behaviour of glucose degradation in Synechocystis sp.M-203 in bioelectrochemical fuel cells", Bioelectrochemistry and Bioenergetics, 1997, Vol. 43, 177-180 [2] that describes a cell using cyanobacteria to reduce the compound 2-hydroxy-1,4-naphthoquinone which serves as electrochemical mediator for electron transfer at the anode. The article by Cooney et al., "Physiologic studies with sulphate-reducing bacterium Desulfovibrio desulfuricans: evaluation for use in a biofuel cell", Enzyme and Microbial Technology, 1996, Vol. 18, pages 358-365 [3], mentions a cell employing sulphate-reducing bacteria to regenerate the sulphide ion that is reduced to sulphate at the anode.

However, the performance of such cells remains insufficient. In addition, the use of microorganisms in the abovementioned fuel cells does not contribute to the improvement in the electrochemical rates at the electrodes, but to the biological production of fuel or to the regeneration of a mediator compound. Consequently, it will still be necessary, for these constructions, to use catalysts on the electrodes, and in particular on the anodes in the case of the examples mentioned, so as to accelerate electron transfer between the fuel and the electrode or, where appropriate, between the electrochemical mediator and the electrode.

Attempts using isolated specific enzymes, such as oxidoreductases, to improve the reaction rates at the electrodes have been explored in the prior art.

Thus, the authors E. Katz et al., in the article "A biofuel cell based on two immiscible solvents and glucose oxidase and microperoxidase-11 monolayer-functionalized electrodes", New Journal of Chemistry, 1999, 481-487 [4], propose the use of the enzyme glucose oxidase to catalyse, on the anode side, the oxidation of glucose used as fuel and the enzyme microperoxidase-11 to catalyse the reduction of cumene peroxide taken as oxidizing agent.

However, although these studies are aimed at improving the rates at the electrodes, and particularly at the cathode, they make use of relatively expensive enzymes and sometimes of additional organic compounds that act as electrochemical mediators to ensure electron transfer between the active site of the enzyme and the electrode. They may also require the use of sophisticated chemical techniques so as to graft suitable enzymes onto the surface of the said electrodes. In the current situation, this kind of cell may be used only for very targeted types of application requiring only low power levels and having no cost constraint.

Finally, the authors Hasvold et al. in the article "Sea-water battery for subsea control systems", Journal of Power Sources, 65, pages 253-261, 1997 [5], relating to a study of batteries with a soluble anode operating in a marine environment, observed that batteries immersed in seawater had a higher efficiency than those operating in the open air. They deduced from this that the improvement in performance was due to the spontaneous formation of a biofilm during operation of the cell (the term "biofilm" denoting a film comprising a set of microorganisms deposited spontaneously on a surface, the said microorganisms deriving from biological water, such as seawater, river water, etc.) particularly on the surface of the cathode, which is thought to be responsible for improving the oxygen reduction catalysis. These observations stem in particular from the studies carried out on the biocorrosion of materials exposed to biological water, such as seawater or river water. These studies have demonstrated that the growth of biofilms leads to an increase in the corrosion potential of these materials, due to an increase in the cathode reaction rate of the corrosion phenomenon.

However, the role of biofilms in improving the operating performance of a battery, especially in the Hasvold publication "Sea-water battery for subsea control systems", Journal of Power Sources, 65, pages 253-261, 1997 [5], mentioned above, is dealt with as a contingent phenomenon taking place during operation of the battery, or even as a phenomenon hampering proper operation of the battery, when the biofilm assumes excessively large proportions and consequently impedes the accessibility of the reactants at the cathode. Furthermore, that document does not present specific techniques for promoting and optimizing the growth of the biofilm so as to improve the performance of the battery.

US-A-3 228 799 describes also a cathode for electrical energy generator coated with bacteria such as Desulfovibrio desulfuricans

There is therefore at the present time a real need for improving the catalysis of electrode reactions, especially the cathode reaction, which situation constitutes a limitation for the proper operation of a fuel cell.

### Summary of the Invention

To do this, the object of the present invention is specifically to propose a process for the treatment of an electrode of a fuel cell, before the said cell is operated, the said method having the result of improving the catalysis of the reaction at the electrode in question.

According to the invention, this result is achieved by a process for the treatment of at least one of the electrodes (cathode and/or anode) of a fuel cell, before the said cell is operated, and before or after the said electrode is placed in the said cell, comprising the step consisting in forming a biofilm on at least part of the surface of the said electrode, by immersing the said electrode in a medium capable of causing the growth of biofilms, the said biofilm being intended to catalyse the reaction at the electrode, and the step consisting in simultaneously subjecting the said electrode to a polarization potential.

The present invention thus provides a process for the treatment of an electrode (cathode and/or anode) of a fuel cell, prior to the operation of the said cell, during which treatment a biofilm is deposited on at least part of the surface of the said electrode, this biofilm attaching naturally to the surface of the electrode. This biofilm is intended to act as catalyst for the reactions at the electrode (that is to say the oxidation reaction at the anode and the reduction reaction at the cathode) when the cell is operated after the treatment process according to the present invention. Catalysis of the reactions at the electrodes is achieved by depositing a biofilm on the surface of the electrodes, because the biofilms are capable of spontaneously manufacturing the elements needed for catalysing the electrode reactions.

Thus, the formation of the biofilm for catalysing the electrode (anode or cathode) reactions makes it possible to limit, or even to completely replace, the charging with mineral catalysts of electrodes. The formation of the biofilm makes also it possible to limit or even to completely replace the materials normally used to make the cathode, such as graphite and platinum, with less expensive materials, such as stainless steels and aluminium, nickel or titanium alloys.

In addition, given that the biofilm synthesizes the elements needed for catalysing the reaction at the electrodes, it is no longer necessary, in the construction of the cell, to add, in the electrode compartments, organic, mineral or biological compounds, as is the case with cells based on the principle of enzyme catalysis.

In addition, the process according to the invention includes, simultaneously with the formation of the biofilm, a step intended to optimize the quality of the biofilm deposited. This step consists in subjecting at least one of the electrodes, which is immersed in a medium capable of causing the growth of biofilms, to a polarization potential (which is a cathodic polarization potential for the cathode and an anodic polarization potential for the anode). This polarization potential may be fixed or may vary and is applied for a suitable time. It is defined with respect to a reference electrode. The suitable time for which this potential is applied may be determined in the following manner:
- during the polarization phase, a curve i = f(t), corresponding to the current delivered by the electrode as a function of time, is established; and
- as soon as the sigmoid-shaped i = f(t) curve exhibits the start of a plateau, the application of the potential may be stopped, the appearance of a plateau in the curve meaning that the surface of the electrode is optimally covered with a biofilm. The electrode is thus ready to be used, optimally, without any other conditioning being necessary.

Of course, the time for which the polarization potential is applied to the electrode, when immersed in a suitable medium, may be less than that mentioned above (that is to say less than the time needed to obtain the onset of a plateau) or greater than it.
For example, this suitable time may be, for example, from 15 to 17 days.

The treatment process according to the invention is therefore particularly beneficial insofar as it makes it possible to obtain an electrode completely or partly covered by a biofilm of optimum quality, the said biofilm being capable, during operation of the cell, of instantly catalysing the electrode reaction without any start-up difficulty

It should be noted that, according to the invention, the process for the treatment of at least one of the electrodes may be carried out when the electrode has not yet been placed in a fuel cell device ("before the said electrode is placed in the said cell") or when the electrode has already been placed in a fuel cell device ("after the said electrode is placed in the said cell"). However, for both these situations, the treatment process according to the invention will always be carried out before the cell is put into operation.

A distinction may be made, through this treatment process according to the invention, from the embodiments of the prior art that mentioned the existence of biofilms in the operation of a battery by the fact that, in these embodiments, the biofilm formed at the surface of the electrodes during the operation of the batteries (the formation of the biofilm then being considered as an artefact and a phenomenon contingent on the operation of the battery), whereas within the context of our invention the biofilm is formed before the cell is put into operation and has optimum catalytic properties thanks to the polarization step.

According the invention, the electrode to be treated by the process of the invention may be a cathode.
When the electrode is a cathode, the polarization potential imposed on the said cathode within the context of the treatment process of the invention must, preferably, correspond to an optimum value. In other words, this polarization potential must be as cathodic as possible, as in this way the cathode treatment process will be more rapid and the currents obtained will be higher (that is to say the current delivered by the cell during its operation will be higher), but this potential must not, however, be too cathodic so as to have a high enough potential difference delivered by the cell during its operation. The optimum polarization potential to be applied to the cathode, complying with the abovementioned compromise, may be easily chosen by those skilled in the art.

Advantageously, polarization potentials ranging from - 0.5 to 0.0 V with respect to a saturated calomel reference electrode (SCE) will be used for treating a cathode according to the process of the invention.

In accordance with the invention, the electrode (cathode and/or anode) intended to be treated is immersed in a medium capable of causing the growth of biofilms. In other words, such a medium is a medium containing a set of microorganisms, the said microorganisms being capable of growing on a support, such as an electrode as in the present case.

The medium capable of causing the growth of biofilms, used to form, during the treatment process, the biofilm on at least part of the surface of an electrode, may be of any type and may be chosen from natural water, such as river water, well water, industrial water, that is to say unsterilized water used in industry,'for example to cool plants, seawater or water derived from a culture medium. It should be noted that, according to the invention, a culture medium is a medium to which nutrients necessary for effective growth of the microorganisms contained in the said medium have been added.

Preferably, the medium capable of causing the growth of a biofilm is seawater, the said seawater being particularized by the fact that it contains a fauna of microorganisms that is varied and therefore particularly suitable for forming high-quality biofilms.

When the electrode to be treated is a cathode, the seawater will be preferably an aerated seawater, i.e a seawater which has not been purged from the air. Such seawater can be seawater coming from the North Sea, the Baltic Sea, the Channel, the Mediterranean Sea, the Atlantic Ocean.

When the electrode to be treated is an anode, the seawater will be preferably an anaerobic seawater, i.e a seawater possibly purged from air, which facilitates the development of anaerobic bacteria (such as sulphate reducing bacteria). In this anaerobic seawater, it hydrogen can be equally added, to develop still further the development of such bacteria.

However, it is understood that the seawater mentioned above can be replaced:
- concerning the cathode, by aerated natural water such as river water, well water and industrial aerated unsterilized water such as those coming from open cooling systems and those coming from purification or epuration systems;
- concerning the anode, by anaerobic natural water such as industrial water coming from closed and unsterilised circuit, or anaerobic water coming from epuration or purification systems.

Also preferably, the medium capable of causing the growth of biofilms is a circulating medium, the said medium, thanks to its continuous replenishment, thus making it possible to replenish the biological fauna continuously and, consequently, to improve the quality of the biofilm being deposited on the surface of the electrode during the said process.

Another object of the present invention is to propose a fuel cell comprising at least one cell having an anode compartment supplied with a reducing agent, the said compartment including an anode, and the said cell having a cathode compartment supplied with an oxidizing agent, the said compartment including a cathode, the said compartments being placed on either side of a membrane (i.e a membrane placed between the anode compartment and the cathode compartment), characterized in that at least one of the electrodes (anode and/or cathode), prior to the operation of the said cell, is coated on at least part of its surface with a biofilm intended to catalyse the reaction at the electrode.

Preferably, the biofilm is deposited on at least part of the surface of at least one of the electrodes by implementing the treatment process as described above.

Apart from the benefit, already mentioned above, of using a biofilm to catalyse the electrode reaction, the fact of depositing a biofilm on at least one of the electrodes (cathode or anode), before the fuel cell is put into operation, makes it possible to offset the slow start of the electrode reaction, which would be the case if the electrode reactions were, among others, catalysed by a biofilm deposited during the operation of the cell. However, the electrode can optionnaly include, in addition to the biofilm deposited on its surface, metal catalysts based on precious or semi-precious metals, such as platinum or rhodium, or complexes that include such metals.

According to the invention, when only one of the electrodes, in particular the cathode, has a biofilm on its surface, deposited before the cell is put into operation, the other electrode may include, for example, catalysts of any type, such as mineral catalysts, for example catalysts based on platinum or on platinum group metals.

However, the anode reaction is preferably catalysed, within the context of this invention, by a suitable biofilm (that is to say a biofilm intended to catalyse the anode reaction) deposited on at least part of the surface of the anode. For example, this biofilm will comprise microorganisms that can produce metabolites capable of increasing the anode reaction rate. It should be noted that the biofilm may be deposited on the surface of the anode by a treatment process according to the invention.

The present invention applies to fuel cells operating in aqueous medium. For this type of operation, the anode and cathode compartments are filled with water, in which an anode and a cathode are respectively immersed and into which, in the respective compartments, a stream of reducing agent and a stream of oxidizing agent are sparged. Preferably the water filling the anode and cathode compartments is water capable of regenerating the biofilm deposited on at least part of the surface of the cathode and optionally of the anode before the cell is put into operation. Preferably, the water filling the anode and cathode compartments is circulating water.

The present invention also applies to cells operating by gas diffusion. For this type of operation, the oxidizing agent and the reducing agent feed their respective compartments directly in the form of a gas stream. However, it should be noted that, for a cell whose cathode reaction and possibly whose anode reaction are catalysed by a biofilm, it is necessary to ensure a moisture content suitable for the survival and replenishment of the biofilm, it being possible for this moisture content to be controlled:
- either by controlling the moisture content of the gases entering the cell, that is to say that the gas stream or streams feeding the compartment or compartments provided with a biofilm will preferably have a moisture content such that it allows the said biofilm to be regenerated;
- or by providing a stream of water coexisting in parallel with the gas stream or streams feeding the compartment or compartments provided with a biofilm, the said stream of water being intended to regenerate the said biofilm;
- or else by the water produced by the reaction, when the cell is a hydrogen/oxygen cell.

Finally, the fact that the cathode and/or anode reaction can be catalysed according to the present invention by a biofilm deposited on at least part of the surface of the cathode and/or of the anode allows the use of cathode and/or anode constituent materials that are less expensive than those used in the prior art.
Thus, advantageously, the electrode (anode or cathode) may be formed from a material chosen from the group comprising stainless steel and aluminium, nickel or titanium alloys.

The present invention may apply to any type of fuel cell, in particular to cells whose oxidizing agent is oxygen and whose reducing agent is hydrogen.

The subject of the present invention is also an electrode (anode and/or cathode) coated on at least part of its surface with a biofilm, before it is placed in the said cell.

The biofilm is preferably deposited on at least part of the surface of the said cathode by the treatment process as described above.

This electrode (anode and/or cathode) is preferably held in a medium capable of regenerating the biofilm, so as to ensure the survival of the said biofilm.

Other advantages will become more clearly apparent on reading the description that follows, given of course by way of illustration but implying no limitation, with reference to the appended drawings.

### Brief Description of the Drawings

Figure 1 shows schematically, in vertical cross section, a hydrogen/oxygen fuel cell operating in aqueous medium, the cathode reaction of which is catalysed by a biofilm deposited on at least part of the surface of the cathode before the said cell is put into operation.
Figure 2 shows schematically, in vertical cross section, a proton exchange membrane cell with gas diffusion.
Figure 3 shows schematically, in vertical cross section, a cell operating in aqueous medium used to implement the present invention.

### Detailed Presentation of Methods of Implementation

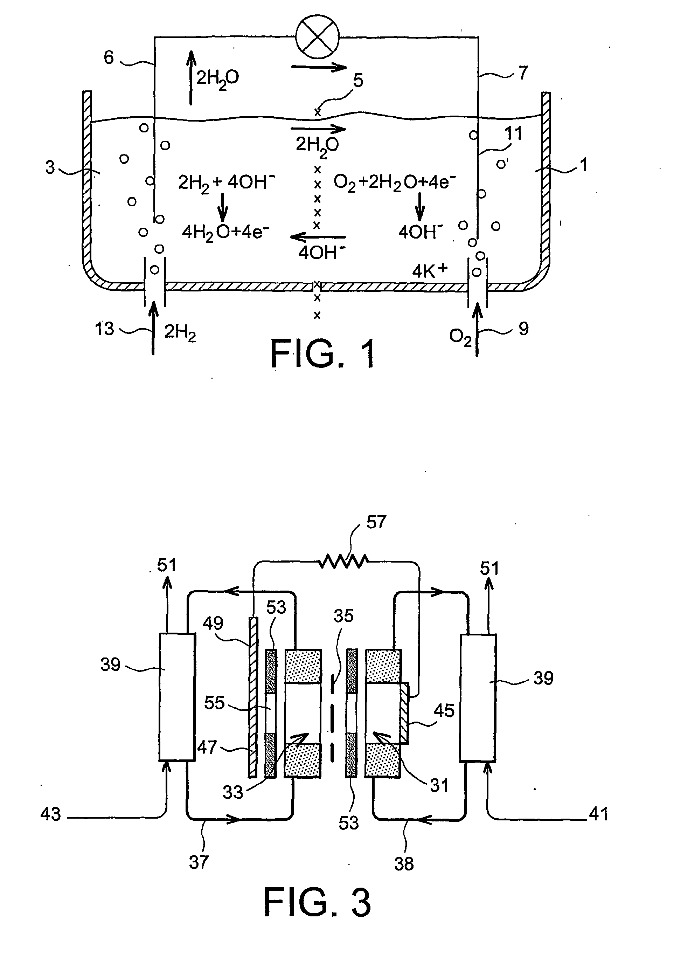

Figure 1 shows schematically a hydrogen/oxygen cell operating in aqueous medium, the cathode reaction of which is catalysed by a biofilm.

This figure shows that the cell comprises in succession a cathode compartment 1 and an anode compartment 3, the said compartments being placed on either side of a semi-permeable membrane 5. The two compartments contain water, in which the suitable electrodes, that is to say the cathode 7 in the case of the cathode compartment 1 and the anode 6 in the case of the anode compartment 3, are immersed. The water filling in particular the cathode compartment is biological water, as defined above. The cathode compartment 1 is provided with an oxygen inlet 9, the said oxygen being sparged into the water in the said compartment. In this compartment, the oxygen is reduced to hydroxyl ions OH⁻, according to the equation O₂ + 2H₂O + 4e⁻ → 4OH⁻, the said ions OH⁻ passing through the semi-permeable membrane in the direction of the anode compartment. According to the invention, the cathode reduction reaction is catalysed by the presence of a biofilm 11 deposited on at least part of the surface of the cathode before the cell is put into operation.

The anode compartment 3 is in turn provided with a hydrogen inlet 13, the said hydrogen being sparged into the biological water. In this compartment, the hydrogen is oxidized to water, according to the equation 2H₂ + 4OH⁻ → 4H₂O + 4e⁻.

Preferably, the biological water present in the cathode compartment is regularly replenished so as to maintain the optimum characteristics of the biofilm during operation of the cell.

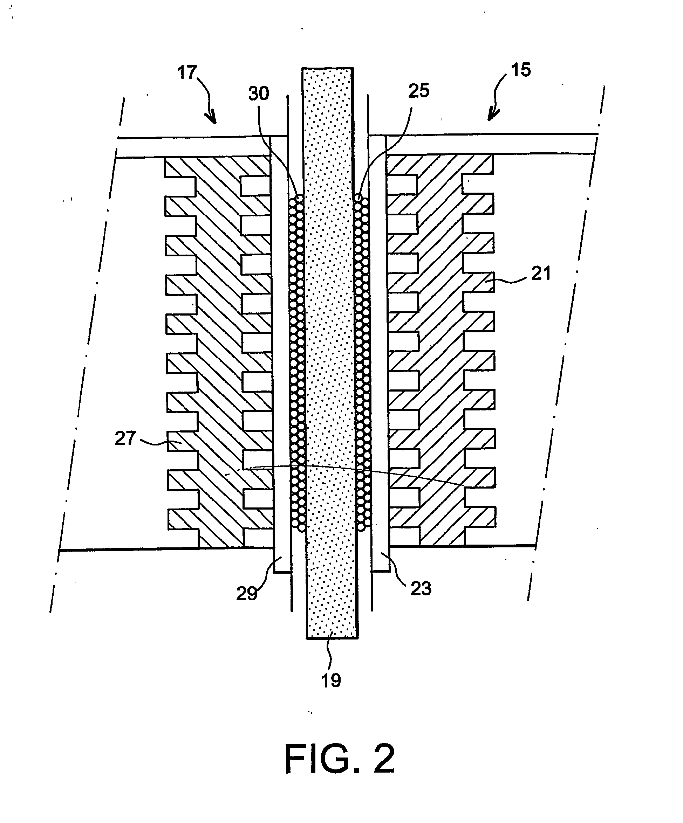

Figure 2 shows a schematic view of a cell of a hydrogen/oxygen fuel cell according to the invention, operating by gas diffusion. This cell comprises, in succession, a cathode compartment 15 and an anode compartment 17 placed on either side of a proton exchange membrane 19.

The cathode compartment comprises a porous cathode 21, an oxygen gas supply system 23 and a biofilm 25, acting as catalyst, located between the cathode and the membrane. The biofilm 25 is shown in the form of beads. According to the invention, the cathode, before the cell is put into operation, is subjected, while immersed in biological water as described above, to a polarization potential for a predetermined time, thus making it possible to optimize the catalytic properties of the biofilm deposited on the surface of the cathode. It should be noted that, to ensure correct operation of such a cell, the cathode reaction of which is catalysed by a biofilm, it is necessary to ensure an adequate moisture content for the survival and replenishment of the biofilm, it being possible for this moisture content to be controlled either by controlling the moisture content of the gases entering the cell, or by providing a water flow system in parallel, or else by the water produced by the reaction in the case of a hydrogen/oxygen cell.

The anode compartment comprises a porous anode 27, a hydrogen supply system 29 and a catalytic layer 30, also shown in the form of beads. This catalytic layer may be made from all types of catalytic materials, such as metals (platinum or platinum group metals), or else from a suitable biofilm (that is to say one capable, in this case, of catalysing the oxidation of hydrogen).

The invention will now be described in relation to the examples given below.

The examples below use a fuel cell operating in aqueous medium, like the one shown in Figure 3.

The anode compartment 31 and the cathode compartment 33 are separated by a Nafion-type proton exchange membrane 35. Two streams of water 37 and 38 flowing from tanks 39 into the cathode compartment 33 and into the anode compartment 31, respectively, are enriched with a sparge 41 of dihydrogen into the anode compartment 31 and a sparge 43 of air into the cathode compartment 33. It should be noted that the stream of water 37 is a stream of biological water intended to ensure effective continuous regeneration of the biofilm deposited on at least part of the surface of the cathode.

The anode 45 is formed from a 30 cm² platinum mesh and the cathode 47 is formed from a stainless steel plate covered with a biofilm 49. The anode 45 and the cathode 47 are electrically connected via a resistor 57 of variable resistance. Outlets 51 are provided at the tanks 39 so that they are replenished with water, especially on the cathode side.

The anode and cathode compartments are held together by clamping, gaskets 53 between the two compartments providing a sealing action. These gaskets are manufactured by cutting them from rubber sheets. One of these gaskets is placed directly against the stainless steel cathode. An open window 55 cut at the centre of the sheet makes it possible to precisely define the working surface of the cathode employed in the operation of the cell.

Prior to being placed in the cell as described above, the stainless steel cathode 47, having dimensions of 100 x 100 x 2 mm in the particular case of these examples, is immersed in circulating seawater and held for several days at a fixed polarization potential Eₚₒₗₐ expressed with respect to the saturated calomel reference electrode (SCE) so as to polarize the said cathode, the said polarization being intended to optimize the catalytic oxygen reduction properties of the biofilm deposited. After this preliminary step, the cathode is inserted into the cell. At the end of the tests, the cell is removed and the cathode is cleaned with mechanical means and then with a sodium hypochlorite solution, and finally rinsed with seawater. It is then put back into the cell in the same configuration as previously and the characteristics of the cell are again tested under such conditions.

The examples below illustrate the results obtained for a cell with the configuration described above, the said cell being subjected to various polarization conditions (potential and duration) before the cell is put into operation. For each of these examples, the ratio of the power delivered with a biofilm (first series of tests) to the power delivered without a biofilm (second series of tests) on the cathode was measured for various electrical resistance values.

### Example 1

The characteristics of the first series of tests were the following:
- polarization potential: -0.10 V/SCE;
- polarization time: 15 days;
- fluid circulating on the cathode side: seawater;
- fluid circulating on the anode side: seawater;
- working area of the cathode: 9 cm².

It should be noted that the cathode was a plate of 316. L stainless steel having the dimensions of 100 * 100 * 2 mm.

Table 1 below gives the variation in the current during the cathode treatment process according to the invention.

**TABLE 1**

| Duration (in days) | 0 | 4 | 6 | 8 | 10 | 10 |
|---|---|---|---|---|---|---|
| Current (in mA) | 0.1 | 0.4 | 2.0 | 7.5 | 10.3 | 9.2 |

In this first series of tests, the power delivered by the cell was measured for various electrical resistance values.

In a second series of tests, the power delivered by the cell was measured for various electrical resistance values, the cell not having a biofilm on the cathode and not having undergone the conditioning step.

The (power with biofilm/power without biofilm) ratios are given in Table 2 below.

**TABLE 2**

| Resistance (in Ω) | 1 | 10 | 100 | 1000 | 10⁴ | 10⁵ | 10⁶ |
|---|---|---|---|---|---|---|---|
| Ratio | 34 | 31 | 29 | 21 | 30 | 7 | 4 |

### Example 2

The characteristics of the first series of tests were the following:
- polarization potential: -0.10 V/SCE;
- polarization time: 15 days;
- fluid circulating on the cathode side: seawater;
- fluid circulating on the anode side: distilled water + NaOH (pH = 12.5);
- working area of the cathode: 9 cm².

The current values recorded as a function of time were identical to those shown in Example 1.

In this first series of tests, the power delivered by the cell was measured for various electrical resistance values.

In a second series of tests, the power delivered by the cell was measured for various electrical resistance values, the cell not having a biofilm on the cathode and not having undergone the conditioning step.

The (power with biofilm/power without biofilm) ratios are given in Table 3 below.

**TABLE 3**

| Resistance (in Ω) | 1 | 10 | 100 | 1000 | 10⁴ | 10⁵ | 10⁶ |
|---|---|---|---|---|---|---|---|
| Ratio | 86 | 81 | 81 | 103 | - | 24 | - |

### Example 3

The characteristics of the first series of tests were the following:
- polarization potential: -0.30 V/SCE;
- polarization time: 17 days;
- fluid circulating on the cathode side: seawater;
- fluid circulating on the anode side: distilled water + NaOH (pH base = 12.5);
- working area of the cathode: 1.8 cm².

In this first series of tests, the power delivered by the cell was measured for various electrical resistance values.

In a second series of tests, the power delivered by the cell was measured for various electrical resistance values, the cell not having a biofilm on the cathode and not having undergone the conditioning step.

The (power with biofilm/power without biofilm) ratios are given in Table 4 below.

**TABLE 4**

| Resistance (in Ω) | 1 | 10 | 100 | 1000 | 10⁴ | 10⁵ | 10⁶ |
|---|---|---|---|---|---|---|---|
| Ratio | 79 | 85 | 84 | 51 | 10 | 5 | 4 |

It may be seen that, for the three examples, the presence of a biofilm deposited on at least part of the surface of the cathode before it is placed in the cell considerably increases the power delivered by the cell having this biofilm.

### References cited

[1] Palmore and Whitesides, "Microbial and Enzymatic Biofuel Cell", American Chemical Society, Chapter 14, pages 271-290 (1994);
[2] E. Katz et al., "A biofuel cell based on two immiscible solvents and glucose oxidase and microperoxidase-11 monolayer-functionalized electrodes", New Journal of Chemistry, 1999, 481-487;
[3] Cooney et al., "Physiologic studies with sulfate-reducing bacterium Desulfovibrio desulfuricans: evaluation for use in a biofuel cell", Enzyme and Microbial Technology, 1996, Vol.18, pages 358-365;
[4] E. Katz et al., in the article "A biofuel cell based on two immiscible solvents and glucose oxidase and microperoxidase-11 monolayer-functionalized electrodes", New Journal of Chemistry, 1999, 481-487; and
[5] Hasvold et al., in the article "Sea-water battery for subsea control systems", Journal of Power Sources, 65, pages 253-261, 1997.

## Claims

1. Process for the treatment of at least one of the electrodes (cathode and/or anode) of a fuel cell, before said cell is operated, and before or after said electrode is placed in said cell, comprising the step consisting in forming a biofilm for catalysing an electrochemical reaction at the electrode on at least part of the surface of said electrode, by immersing said electrode in a medium capable of causing the growth of biofilms, **characterized in that** it comprises further the step consisting in simultaneously subjecting said electrode to a polarization potential.

2. Treatment process according to claim 1, in which the medium capable of causing the growth of biofilms is chosen from :
- natural water, such as river water, well water or seawater;
- industrial water, and water derived from a culture medium.

3. Treatment process according to claim 2, in which the medium capable of causing the growth of biofilms is seawater.

4. Treatment process according to any one of claims 1 to 3, in which the medium capable of causing the growth of biofilms is a circulating medium.

5. Treatment process according to any one of claims 1 to 4, in which the electrode is a cathode.

6. Process according to claim 5, in which the polarization potential applied to the cathode has a value ranging from -0.5 V to 0.0 V with respect to a saturated calomel reference electrode (SCE).

## Patentansprüche

1. Prozess zur Behandlung wenigstens einer der Elektroden (Kathode und/oder Anode) einer Brennstoffzelle, bevor die Zelle betrieben wird, und bevor oder nachdem die Elektrode in die Zelle eingesetzt wird, dass den Schritt umfasst, der darin besteht, dass ein Biofilm zum Katalysieren einer elektrochemischen Reaktion an der Elektrode an wenigstens einem Teil der Oberfläche der Elektrode ausgebildet wird, indem die Elektrode in ein Medium eingetaucht wird, das in der Lage ist, das Wachstum von Biofilmen zu bewirken, **dadurch gekennzeichnet, dass** es des Weiteren den Schritt umfasst, der darin besteht, die Elektrode gleichzeitig einem Polarisationspotential auszusetzen.

2. Behandlungsverfahren nach Anspruch 1, wobei das Medium, das in der Lage ist, das Wachstum von Biofilmen zu verursachen, ausgewählt wird aus:
natürlichem Wasser, wie beispielsweise Flusswasser, Brunnenwasser oder Meerwasser;
Brauchwasser und Wasser, das von einem Kulturmedium stammt.

3. Behandlungsverfahren nach Anspruch 2, wobei das Medium, das in der Lage ist, das Wachstum von Biofilmen zu verursachen, Meerwasser ist.

4. Behandlungsverfahren nach einem der Ansprüche 1 bis 3, wobei das Medium, das in der Lage ist, das Wachstum von Biofilmen zu verursachen, ein zirkulierendes Medium ist.

5. Behandlungsverfahren nach einem der Ansprüche 1 bis 4, wobei die Elektrode eine Kathode ist.

6. Behandlungsverfahren nach Anspruch 5, wobei das Polarisationspotential, das an die Elektrode angelegt wird, einen Wert in Bezug auf eine gesättigte Kalomel-Bezugselektrode (SCE) hat, der von -0,5 Volt bis 0,0 Volt reicht.

## Revendications

1. Procédé de traitement d'au moins l'une des électrodes (cathode et/ou anode) d'une pile à combustible, avant mise en fonctionnement de ladite pile et avant ou après la mise en place de ladite électrode dans ladite pile, comprenant l'étape consistant à former un biofilm destiné à catalyser la réaction électrochimique à l'électrode sur au moins une partie de la surface de ladite électrode, par immersion de ladite électrode dans un milieu apte à engendrer le développement de biofilms, **caractérisé en ce qu'**il comprend, en outre, l'étape consistant à soumettre simultanément ladite électrode à un potentiel de polarisation.

2. Procédé de traitement selon la revendication 1, dans lequel le milieu, apte à engendrer le développement de biofilms, est choisi parmi :
- les eaux naturelles telles que les eaux de rivière, les eaux de puits, les eaux de mer ;
- les eaux industrielles et les eaux issues d'un milieu de culture.

3. Procédé de traitement selon la revendication 2, dans lequel le milieu apte à engendrer le développement de biofilms est une eau de mer.

4. Procédé de traitement selon l'une quelconque des revendications 1 à 3, dans lequel le milieu apte à engendrer le développement de biofilms est un milieu circulant.

5. Procédé de traitement selon l'une quelconque des revendications 1 à 4, dans lequel l'électrode est une cathode.

6. Procédé selon la revendication 5, dans lequel le potentiel de polarisation appliqué à la cathode présente une valeur allant de -0,5 V à 0,0 V par rapport à une électrode de référence au calomel saturé (ECS).
